# EUROPEAN PATENT APPLICATION

(11) **EP 2 090 935 A1**
(43) Date of publication of application: **19.08.2009**
(21) Application number: 09152720.0
(22) Date of filing: 12.02.2009
(51) Int. Cl.: G03G 9/083, G03G 9/09, G03G 9/097, C09C 1/00, C09D 11/00, C09D 11/02

(54) **Medium for laser printing including optical special effect flakes**

(30) Priority: 13.02.2008 US 28442 P
(71) Applicant: JDS Uniphase Corporation, Milpitas, CA 95035 (US)
(72) Inventor: Argoitia, Alberto, Santa Rosa, CA 95405 (US); Delst, Cornelis Jan, Fairfax, CA 94930 (US)
(74) Representative: Walker, Stephen

(57) **Abstract**

A laser toner includes optical effect taggent flakes or other structures in a binder suitable for binding particles to a substrate. Preferably the optical effect taggent structures have a substantially same shape or same indicia within the binder sized to be suitable for laser printing. After printing the flakes or structures become bonded to the substrate they are printed upon and are discernable by viewing with magnification.

## Description

### CROSS-REFERENCE TO RELATED APPLICATIONS

The present invention claims priority from United States Patent Application No. 61/028,442 filed February 13, 2008, entitled "Microstructured Covert Taggants On Electrophotographic And Magnetographic Toner Laser Printing", by Argoitia et al..

### FIELD OF THE INVENTION

This invention relates generally to laser printing from a printer or a copier wherein added security features are provided to a printing medium such as laser toner.

### BACKGROUND OF THE INVENTION

Over the past decade there have been many introductions of anti-fraud technologies to protect products and documents from counterfeiting or digital replication, and to assist in providing simple verification of authenticity. Many of these technologies require the use of sophisticated and costly equipment to be implemented and can not be altered if the user wishing protection so chooses, as one might change one's password. For example, coating a document or article with a color shift coating often requires that article to be placed in vacuum deposition chamber so be successfully coated. The equipment is costly and the set up time to print a batch of articles is considerable.

Of course labels having security features manufactured into or upon the label can be adhesively mounted to a document or article, however such labels visible to counterfeiters are often copied, and often these counterfeits pass scrutiny without question. Furthermore, in some instances labels can be peeled off and reused on other documents or packages fooling the public into thinking that the article is genuine.

This invention provides an affordable solution offering substantial security to laser printed documents, heretofore not known.

Laser printers are ubiquitous and using a laser printer or copier requires very little skill. With the press of a button, a user can request a document on his or her computer be printed. Millions of individual users have laser printers, laser copiers, or multi-function laser printer-copiers coupled to their personal or work computers. These laser printers and copiers use laser toner that is specifically formulated and housed in a cartridge customized to fit within the particular printer or copier. Many of these laser printer/copier cartridges are refillable and can therefore be refilled and reused a number of times. Over the years, laser printing has evolved and toners have also; one can now purchase color laser printers having toners in a plurality of colors capable of printing a colored image. Those involved in improving laser printers have been able to manufacture printers with higher resolution capabilities, printing a greater number of pages per minute and with toners that are more robust, and with the ability to print on both sides of the page. Notwithstanding, laser printer functionality has not evolved far beyond this.

### Laser Printing System

The present invention relates in general to a toner composition. More specifically, the present invention relates to a toner composition having an external additive with specific characteristics present, preferably in a specific ratio in the form of covert taggents, useful in verifying the authenticity of the printed document. For example, some classified documents or documents that serve as passes or entry to restricted areas often need to be authenticated. Once this laser toner is used to print a document, the taggents hidden with the printed document to the human eye are visible with magnification so that a document's authenticity can be verified. There are an infinite number of different taggent designs that can be used thereby increasing the level of security. Furthermore different taggent combinations can be used together increasing the level of security.

In recent years, electrophotographic image forming apparatuses such as laser printers, fax machines, and copiers have been widely used to obtain the benefit of highspeed operation and high quality images thereof.

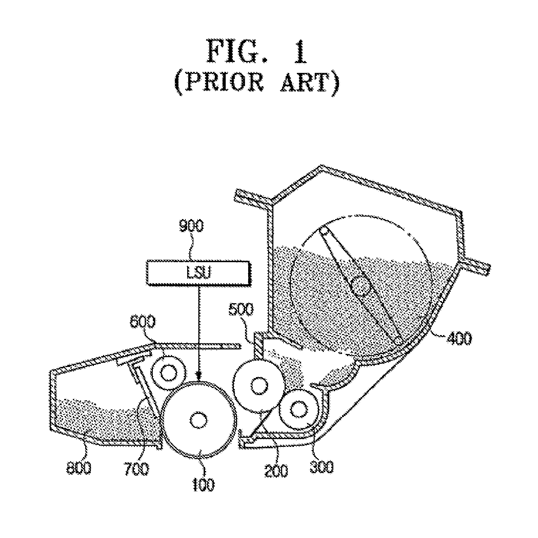

FIG. 1 is a schematic diagram of a conventional dry electrophotographic image forming apparatus based on a non-contact developing system. In the operational process of the dry electrophotographic image forming apparatus of FIG. 1, a photosensitive object (or photosensitive drum) 100 is charged by a charging device 600, and an image is exposed to a laser beam from a laser scanning unit 900 to develop a latent image on the surface of the photosensitive drum 100. A dry toner 400 in a supply roller 300 is supplied to a developing roller 200. A toner layer regulating device 500 ensures that the toner supplied to the developing roller 200 has a thin and uniform thickness. During this process the toner is frictionally charged by the contact between the developing roller 200 and the toner layer regulating device 500 which regulates a measurement of weight of the toner, and a measurement of amount of charge per unit weight of the toner. The toner, having passed through the regulating device 500, is then developed to an electrostatic latent image on the photosensitive drum 100, is transferred by a transfer roller (not shown) to a recording medium such as a sheet of paper, and is fused by a fuser (not shown). Therefore, prior to fusing, as the drum continues to rotate, the electrostatic image is created in dependence upon regions of the drum where the laser light did not impinge upon the drum; the drum makes contact with the developing roller which is completely coated with the toner; however, when the roller and the drum make contact, the toner coated on the roller sticks only to the portions of the electrostatic image of the drum. Subsequently, the drum rotates to make contact with the paper, which is sandwiched between the drum and a transfer roller. The toner of the electrostatic image is then transferred to the paper prior to fusing. Any residual toner on the photosensitive drum 100 is wiped by a cleaning blade 700, stored in the residual toner collecting bin 800, and the printing process is repeated again starting from the charging step to the image forming step.

Numerous US patents describe the laser printing process, for example descriptions can be found in US 4,847,652, US 4,685,793, and US 4,174,170.

In some other printers, the charges may be reversed. In this instance, a positive charged electrostatic image is created on a negative background.

In some current more advanced printers, the paper is strongly electro-statically charged to assure an adequate pull and transfer of the particles of toner from the image drum. To fix the toner within the paper, the paper passes between heated rollers or fuser. The heat and pressure applied by the rollers melts the toner so that it fuses with the fibers of the paper.

In a related printing technology, magneto-graphic printing, the photoconductor and toners are magnetic. The drum is charged, imaged, and toned for the first impression and recharged and toned for succeeding impressions.

A detailed explanation of laser printing can be found in the internet at the following Internet sites:

### http://computer.howstuffworks.com/laser-printer.htm

### http://en.wikipedia.org/wiki/Laser_printer

### Composition of standard toners used by the laser printers

Laser toner, in a standard black-and-white laser printer, is a mixture of carbon, polymeric resins (styrene acrylate or polyester resin), additives for controlling the electrostatic properties, fluidizing and lubricant agents, etc. In operation, when printing, the polymer of the toner particles is melted by the fuser causing the carbon particles to stick to the paper or medium upon which the image is to be printed. Colored pigments are used for cyan, magenta, and yellow for color laser toners and magnetic iron oxide particles are used for magnetic toners. Particle size, shape and distribution are a very important and influence the flow and the electrostatic properties of the toner.

Early laser printers used toners with a particle size in the range of 14-16 microns. However more current state-of-the-art laser printers have a reduced average toner particle size to approximately 8 microns, thus improving the image resolution to about 600 dots per inch.

Optimal image quality is dependant to a large extent on providing laser toner particles with narrow size distributions, i.e. centered around a mean diameter of 8µm-10µm, and particles which have narrow shape distributions, i.e. being substantially similar in shape, and ideally having a cross-section that is circular or square, and pixel-like.

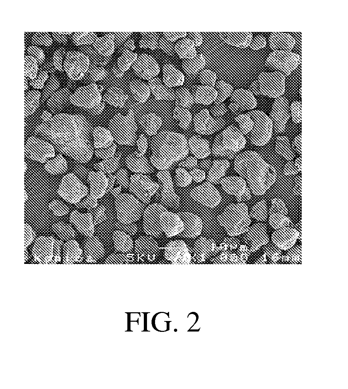

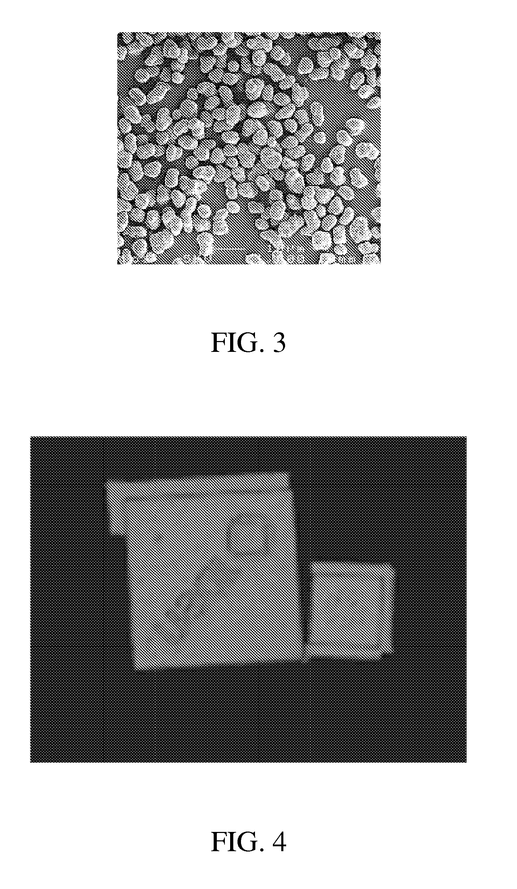

FIGS. 2 and 3 are microphotographs showing, typical low quality and high quality toners, respectively. The white bars in each electron scanning micrograph represent 10 microns in size. FIG. 2 shows that for the coarser toner some of the particles are as large as 20 microns across. The finer toner shown in FIG. 3 has some particles in the order of 10 microns.

In accordance with this invention, we have produced shaped, and, or symboled flakes or manufactured structures to add to laser toner or binder with sizes similar to the average particle sizes of typical toners. Advantageously these flakes or structures can easily be seen with magnification and the print can be verified as being authentic if the expected symbols or shaped structure are present.

### BRIEF DESCRIPTION OF THE DRAWINGS

Exemplary embodiments of the invention are described in the drawings in which:

FIG. 1 is a sectional view showing conventional dry electrophotographic image forming apparatus based on a non-contact developing system.

FIG. 2 is a Scanning Electron Micrograph (SEM) illustrating low quality toner particles;

FIG. 3 is a Scanning Electron Micrograph (SEM) illustrating higher quality toner particles;

FIG. 4 is a microphotograph of a 10x10 micron square shaped flake with a clover leaf representation and a 24x24 micron square shaped flake with a word JDSU shown from a back side along with a logo.

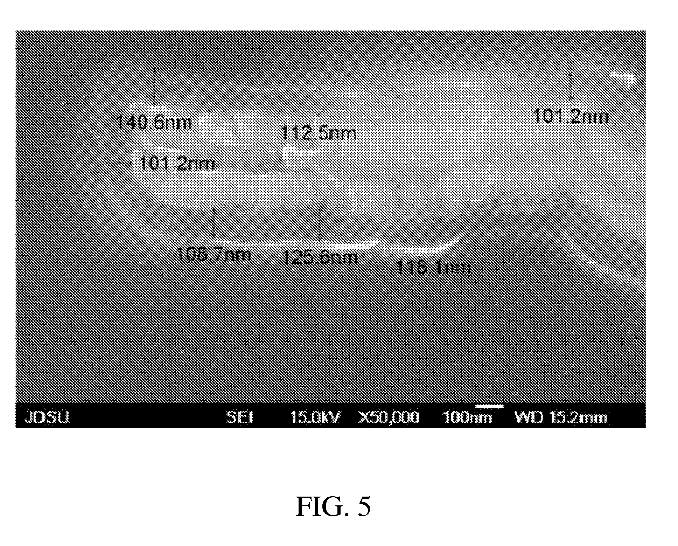

FIG. 5 shows a scanning electron micrograph of a 24x24 3-layer micron charm encapsulated with a layer of SiOH.

Fig. 6 is a microphotograph of an image printed in accordance with this invention wherein 10 micron clover charms and 14 micron JDSU charms are mixed with a standard black toner.

FIG. 7 is a SEM of a single charm magnified 500 times in a mixture of toner particles.

FIG. 8 is the same charm shown in FIG. 7 magnified 2000 times.

FIGs. 9 and 10 are SEMs of the charm of FIG. 7 magnified 7000 times and 15,000 times respectively wherein a clover leaf embossed thereon is visible.

FIG. 11a is a microphotograph of a laser printed image magnified wherein laser toner particles and charms can be seen.

FIG. 11b is a microphotograph of a single laser toner charm of dimension 24x24 microns, magnified.

FIG. 12 is a series of microphotographs interconnected by arrows wherein a letter "S" is shown magnified several times in each subsequent figure.

FIG. 13 is a microphotograph of a charm embedded on a clear polymer that is part of the toner agglomerates.

### SUMMARY OF THE INVENTION

In accordance with the invention a medium for laser printing is provided, comprising:

a binder suitable for binding particles to a substrate; and

a first plurality of optical effect structures within the binder sized to be suitable for laser printing, wherein said flakes are discernable upon viewing with magnification.

The optical effect structures may be flakes or wherein the flakes are generally planar flakes comprising one or more layers of material, however these flakes may have embossing therein or patterns thereon forming diffraction gratings or forming logos or other indicia that can be seen with magnification but that cannot be seen without magnification. Alternatively other man-made structures can be provided such as pyramidal-like structures or discs.

In accordance with another aspect of the invention a kit is provided comprising laser toner and optical effect flakes for combining to form laser toner having security features therein.

### DETAILED DESCRIPTION

This invention is capable of using a typical commercially available printer or copier/printer and providing an enhanced security to a printed document. Simple inspection with a magnifying loop allows otherwise hidden printed charms within a document to be seen thereby providing some authentication of the printed document.

Referring once again to FIG. 2 a microphotograph of a relatively high quality laser toner is shown, wherein the fine particles are approximately 10 microns in size.

In a first embodiment of this invention, non-randomly shaped manufactured structures in the form of flakes having a dimension of approximately 10 microns in size are added to a conventional fine particle dry toner in a concentration of approximately 0.1 %. This mixture is placed within a laser toner cartridge and is printed on a document using standard printer commands.

Referring now to FIG. 4, two flakes are shown; a larger flake having an inverted JDSU impressed within the flake and a smaller flake having a symbol thereon. The smaller flake has a dimension across of approximately 10 microns across its surface. Partial frames are seen that were created so that the flakes would separate along frame lines and so that the flakes would be substantially square. A description of flakes having frames or borders can be found in United States patent applications 20060035080, 2008107856, and 20080236447, all in the name of Argoitia. Flakes of this type can be single layer or multi-layer flakes, and may include color-shifting flakes, preferably in the form of a Fabry-Perot type structure, requiring as few as three layers for a non-symmetrical stack, and as few as five layers for a symmetrical layer stack of flakes. The advantage of having a symmetrical stack is that which ever way the flakes fall, that is on either side, the observed effect will be color shifting. Non-symmetrical flakes will either have a reflective effect or a color shifting effect, depending on which side is upwardly facing on the printed document. The flakes can also be dielectric shaped flakes with a single layer design or using the well known (HLH)n or (LHL)n multilayer stacks. These multilayer stacked flakes can have colorshifting properties. Since these flakes are made using only dielectric layers, they could have electrostatic properties suitable to be attracted by the electrostatically charged image of the drum. At this point, all dielectric flakes and flakes containing metallic layers have been tested with favourable results.

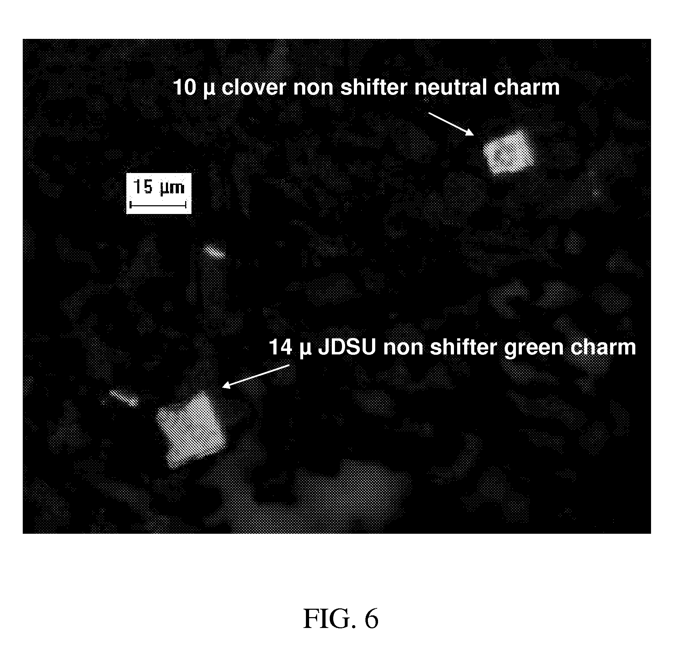

Turning now to Fig. 6 a microphotograph of a test print is shown, wherein approximately 100 grams of toner is loaded with 1 gram of 10 micron clover charms and 0.1 gram of 14 micron JDSU charms. The clover charms are multilayer charms consisting of 2QW ZnS @ 550 nm/ 100 nm Al/ 2QW ZnS @ 550 nm. The 14 micron JDSU charms consist of Cr/4QW ZnS @ 510 nm/ 100 nm Al/ 4QW ZnS @ 510 nm/Cr corresponding to a non shifter green charm. Multilayer color shifting flakes having an absorber, dielectric spacer layer and reflector layer can be used in combination with other flake like charms or can be used alone. A five layer symmetric flake is preferable so that the flake has color shifting properties regardless of which side randomly ends upwardly facing.

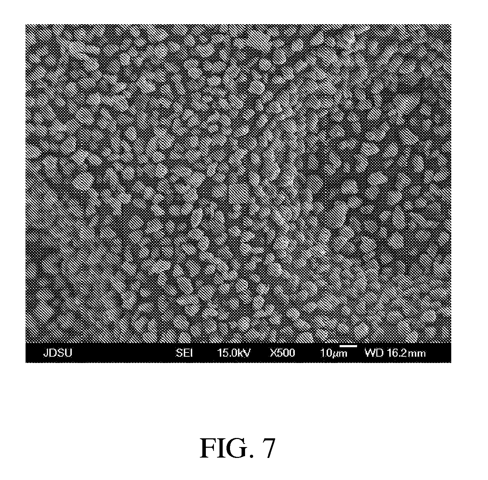

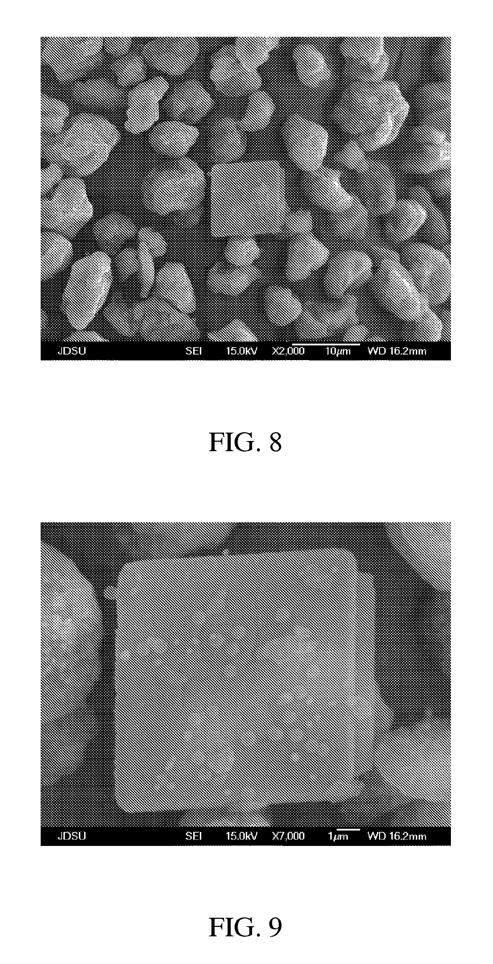

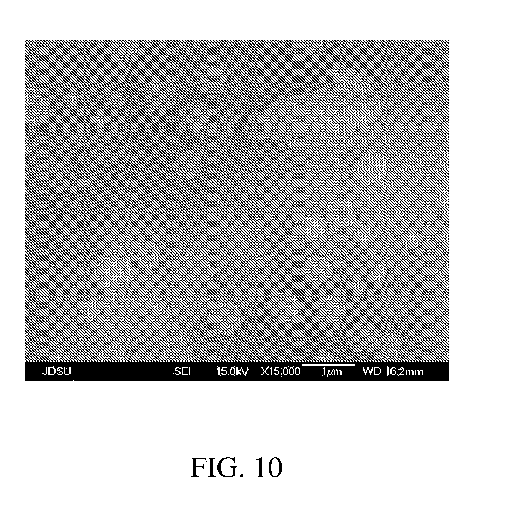

Figures 7 through 10 illustrate a flake having indicia in the form of a clover embossed thereon in a mixture of toner particles. All of the microphotographs are magnified ranging from 500 to 15,000 times magnification respectively.

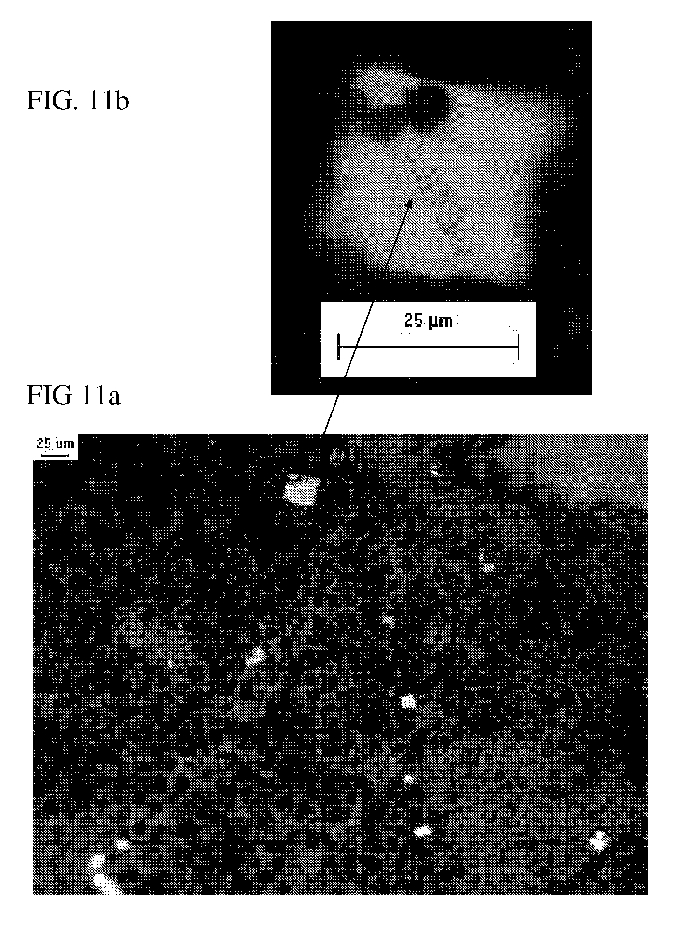

Turning now to FIG. 11a, a printed region having a plurality of charms is shown.
FIG. 11b shows a magnification of one of the charms in an upper region of Fig. 11a. One undesired effect that is sometimes present after an image is printed is that some of the dark toner particles cover a portion of one or more charms thereby masking what would otherwise be visible areas of the charms. This is seen clearly in FIG. 11b. The effect is most evident when black toner is used with a reflective charm or a toner that has a contrasting color to the charm. In an attempt to obviate this problem, in an embodiment of this invention, charms can be added to a clear polymer without the addition of dark toner particles. Into this mixture of charms, color shifting flakes or charms can optionally be added. We have found that the clear polymer when heated between the rollers of the printer, sufficiently bind the charms and color shifting particles to the paper being printed.

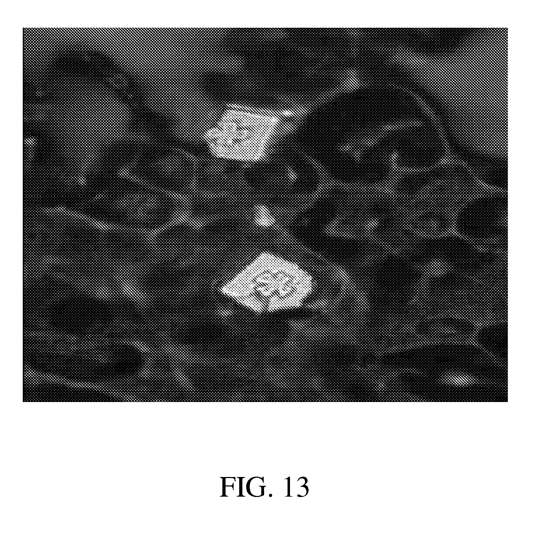

FIG. 13 shows a charm embedded on a clear polymer that is part of the toner agglomerates, proving that the polymer of the toner melts and binds the charms to the substrate.

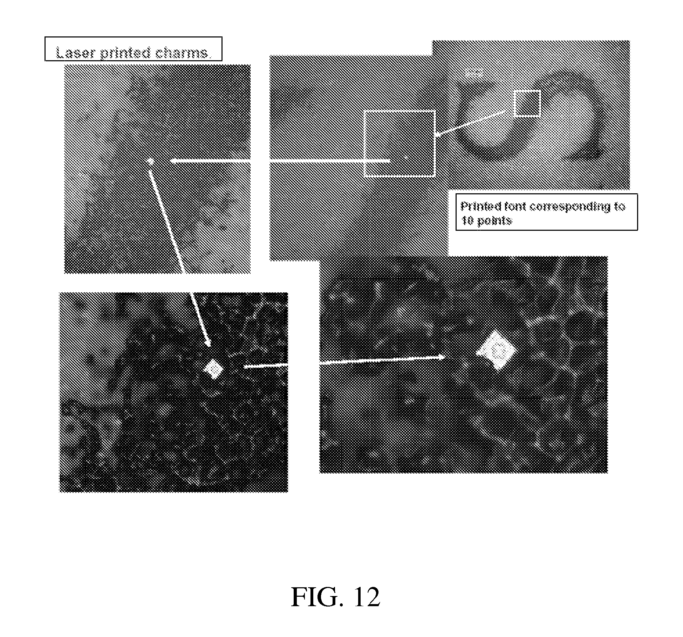

Turning now to FIG. 12 a series of microphotographs are shown interconnected with arrows, beginning with a letter S printed in a 10 point font on the upper right of the figure. Each subsequent photograph in a counter clockwise direction shown with an arrow pointing to the next photograph illustrates a same charm printed within the letter S, and the magnification is increased in each subsequent photograph. FIG. 12 clearly illustrates the utility of this invention. What appears to be typical laser printed text, has hidden within printed characters or printed images taggents that can be used to identify the authenticity of a printed document. These taggents can serve as micro-signatures within a printed document. Furthermore, by varying the taggents, higher levels or security can be imbedded in a printed document. For example different percentages of different taggents can be used, and conveniently a form of further encoding can be performed by using different taggents in different colors of toner in a color laser printer.

This invention also provides the flexibility of adding one's personal taggents to standard laser printer toner, by filling a cartridge with a standard or specialized toner and adding a particular taggent or amount of taggent flakes to the toner.

In yet another embodiment, other structures such as micro-pyramidal, or other shaped micro-structures having dimensions of about 10 microns can be added to laser toner and can be printed with the toner on a document. Although in preferred embodiments of this invention, flakes having a predetermined, same shape are used, the invention is not limited to planar flake-like structures. Diffractive planar-like structures can be added to the toner as well, wherein substantially planar flakes having diffractive structures therein or thereon may be used.

## Claims

1. A medium for laser printing, comprising:
a binder suitable for binding particles to a substrate; and
a first plurality of optical effect taggent structures having a substantially same shape or same indicia within the binder sized to be suitable for laser printing, wherein said structures are discernable upon viewing with magnification.

2. A medium as defined in claim 1, wherein the binder is a polymeric binder material and wherein the first plurality of special effect taggent structures are dispersed within the binder material.

3. A medium as defined in claim 1, wherein first plurality of taggent optical effect structures are coated with the binder.

4. A medium as defined in claim 1 wherein the optical effect taggent structures are flakes and wherein the medium further comprises a toner material that is visually distinguishable from the taggent flakes.

5. A medium as defined in claim 4, further comprising toner, wherein the first plurality of optical effect taggent structures having an identifiable feature that when magnified, distinguishes them from the binder.

6. A medium as define in claim 5, wherein the taggent structures are flakes which are at least one of: a substantially same predetermined shape, color shifting flakes, flakes having indicia thereon, and diffractive flakes.

7. A medium as defined in claim 3, wherein at least some of the taggent structures have indicia therein or thereon that can be seen with magnification, and wherein the indicia are smaller than 20 microns.

8. A medium as defined in claim 4 wherein the taggent flakes are less than 50 microns across their surface.

9. A medium as defined in claim 4, wherein the taggent flakes each comprise a layer of metal or a single layer or a multilayer of dielectric materials.

10. A medium as defined in claim 8, wherein the metal is Al.

11. A medium as defined in claim 9, wherein the layer of metal supports one or more layers of a dielectric material.

12. A medium as defined in claim 9 wherein the dielectric material is a dielectric polymeric material or is one of ZnS and MgF2.

13. A medium as defined in claim 4, wherein the medium is composed of less than 15% taggent flakes.

14. A medium as defined in claim 13, wherein some of the taggent flakes are each less than 500 nm thick less than 900 µ² in area across a visible surface.

15. A medium as defined in claim 13, wherein some of the taggent flakes are shaped flakes comprised of a metal layer having indicia thereon.

16. A medium as defined in claim 13, wherein at least some of the taggent flakes comprise a central layer of Al and a coating on upper and lower surfaces of the central layer of ZnS, or a coating enveloping the Al central layer of ZnS.

17. A medium as defined in claim 1 disposed within a laser printer or copier cartridge.

18. A medium as defined in claim 4, wherein the flakes are microstructured covert taggant flakes.

19. A medium as defined in claim 4 disposed in separate containers of toner for printing in a same printer and wherein at least some of the separate containers have different taggents than other of the containers wherein the different taggents are visually distinguishable under magnification.

20. A medium as defined in claim 1, wherein the shaped flakes are magnetic for use in magneto-graphic printing.

21. A kit comprising laser toner and optical effect flakes for combining to form laser toner having security features therein.
